Europäisches Patentamt

European Patent Office

Office européen des brevets

(19)

(11) Numéro de publication: **0 094 291**
**A1**

## (12) DEMANDE DE BREVET EUROPEEN

(21) Numéro de dépôt: **83400861.7**

(22) Date de dépôt: **29.04.83**

(51) Int. Cl.³: **H 01 M 4/58**, C 01 B 31/00

(30) Priorité: **04.05.82 FR 8207736**

(43) Date de publication de la demande: **16.11.83**
**Bulletin 83/46**

(84) Etats contractants désignés: **DE GB IT NL**

(71) Demandeur: **Etablissement Public dit: CENTRE NATIONAL DE LA RECHERCHE SCIENTIFIQUE (CNRS), 15, Quai Anatole France, F-75007 Paris (FR)**

(72) Inventeur: **Baron, Françis, Cité Mussonville Bat. E. Appt. 561, F-33130 Begles (FR)**
Inventeur: **Flandrois, Serge, 29 rue P. de Coubertin, F-33600 Pessac (FR)**
Inventeur: **Pacault, Adolphe, C.R.P.P. Domaine Universitaire, F-33405 Talence Cedex (FR)**

(74) Mandataire: **Ahner, Francis et al, CABINET REGIMBEAU 26, avenue Kléber, F-75116 Paris (FR)**

(54) **Matériau cathodique constitué par un composé d'insertion graphite-chlorure de manganèse, son procédé de préparation et les accumulateurs électrochimiques utilisant un tel matériau cathodique.**

(57) Matériau cathodique pour accumulateurs électrochimiques constitué par un composé d'insertion du graphite avec le chlorure de manganèse de formule:

$$C_x \ Mn \ Cl_y$$

dans laquelle:

$$x = 5,6 \pm 0,1 \text{ et } y = 2,4 \pm 0,1.$$

Procédé de préparation d'un tel composé d'insertion par chauffage à une température d'environ 500°C, d'un mélange pulvérulent de graphite et de chlorure de manganèse anhydre sous atmosphère de chlore (24) dans un réacteur (10).

MATERIAU CATHODIQUE CONSTITUE PAR UN COMPOSE D'INSERTION
GRAPHITE-CHLORURE DE MANGANESE, SON PROCEDE DE PREPA-
RATION ET LES ACCUMULATEURS ELECTROCHIMIQUES UTILISANT
UN TEL MATERIAU CATHODIQUE

La présente invention concerne un nouveau
matériau cathodique constitué par un composé d'insertion du graphite avec le chlorure de manganèse, son
procédé de préparation ainsi que les accumulateurs
électrochimiques utilisant un tel matériau en tant
que cathode.

Dans la technique antérieure, on a déjà
suggéré d'utiliser en tant que matériau de cathode
différents composés d'insertion du graphite avec des
chlorures métalliques et en particulier avec le
chlorure de nickel. Cependant, bien que les cycles
de charge-décharge avaient été réalisés dans des
conditions très douces, il s'est avéré que les rendements
coulombiens étaient assez faibles. La capacité utile
récupérable des accumulateurs électrochimiques utilisant
de tels matériaux cathodiques était donc insuffisante.

La présente invention concerne un nouveau
matériau cathodique pour accumulateurs électrochimiques,
constitué par un composé d'insertion du graphite avec
le chlorure de manganèse de formule :

$$C_x \, Mn \, Cl_y$$

dans laquelle :

$x = 5,6 \pm 0,1$

$y = 2,4 \pm 0,1.$

Dans la pratique, il s'est avéré qu'un tel
composé d'insertion présentait, par rapport aux composés
d'insertion graphite-chlorure de nickel, un certain
nombre d'avantages décisifs, parmi lesquels on relèvera
en particulier :

. Les composés d'insertion graphite-chlorure de manganèse sont utilisables en présence d'électrolytes ayant n'importe quelle gamme de pH, alors que les composés d'insertion correspondant à base de chlorure de nickel ne sont utilisables qu'en milieu basique.

. Le manganèse peut être oxydé théoriquement de $Mn^{2+}$ à $Mn^{7+}$, alors que pour le nickel on ne peut obtenir qu'un état maximum d'oxydation $Ni^{4+}$ ; le manganèse permet donc un stockage théorique possible de 5 Faraday au lieu de seulement 2 Faraday pour le nickel.

. En raison du potentiel d'oxydo-réduction très bas (environ -1,5 Volt) de la réaction $Mn^{2+} \longrightarrow Mn^{0}$, il ne peut y avoir réduction du manganèse à l'état d'oxydation 2+ en manganèse métallique à l'intérieur du graphite. En revanche, une telle réaction de réduction à l'état métallique est observée dans le cas du nickel (potentiel d'oxydo-réduction en milieu fortement basique environ - 0,9 Volt), cette réaction étant irréversible et produisant une détérioration de l'électrode qui avait notamment pu être observée en cas d'erreur de branchement de l'accumulateur à la charge.

. Le composé d'insertion du graphite avec le chlorure de manganèse est un composé d'insertion du premier stade répondant à la formule $C_x Mn Cl_y$ avec $x = 5,6 \pm 0,1$ et $y = 2,4 \pm 0,1$, alors que le nickel ne peut conduire qu'à un composé d'insertion du second stade de formule $C_x Ni Cl_y$ avec $x = 11,3$ et $y = 2,13$. Le composé d'insertion à base de manganèse est donc plus riche en matière active.

. La préparation du composé d'insertion du graphite avec le chlorure de manganèse s'opère dans les conditions réactionnelles plus douces que celles nécessaires à l'obtention du composé d'insertion à base de chlorure de nickel ; la température d'insertion du manganèse est en particulier inférieure de plus de 100°C à celle du nickel.

. Le manganèse, qui est le onzième élément de l'écorce terrestre, est bien meilleur marché que le nickel.

. Le manganèse est utilisé de façon classique en tant que cathode dans les piles type Leclanché (couple $MnO_2$-Zn). La fabrication de telles piles coûte environ 10 fois le prix de l'énergie stockée, et il serait donc très rentable de pouvoir les rendre rechargeables. Le composé d'insertion graphite-chlorure de manganèse selon l'invention permet précisément de recharger un tel type d'accumulateur électrochimique dont la cathode est constituée par ce composé d'insertion.

La présente invention concerne également le procédé de préparation du composé d'insertion du graphite avec le chlorure de manganèse, qui consiste à chauffer un mélange pulvérulent de graphite et de chlorure de manganèse anhydre sous atmosphère de chlore et à une température d'environ 500°C.

De façon avantageuse, le mélange pulvérulent de départ contient le chlorure de manganèse en excès par rapport au graphite, et plus particulièrement contient environ 1 partie en poids de graphite pour environ 3 parties en poids de chlorure de manganèse anhydre.

La présente invention se rapporte également aux accumulateurs électrochimiques comprenant une cathode précisément constituée par le composé d'insertion de graphite avec le chlorure de manganèse tel que défini précédemment.

D'autres caractéristiques et avantages de la présente invention apparaîtront à la lecture de la description détaillée faite ci-après, notamment en référence aux dessins annexés, sur lesquels :

- la figure 1 représente le schéma d'un appareillage permettant la mise en oeuvre du procédé selon l'invention ;

- la figure 2 représente le schéma d'une cellule de polarisation utilisée pour la réalisation de divers tests électrochimiques portant sur le composé d'insertion de l'invention ;

- la figure 3 représente les courbes de charge-décharge d'une électrode $C_{5,6}$ Mn $Cl_{2,4}$ en milieu basique ;

- la figure 4 représente les courbes de charge-décharge d'une électrode $C_{5,6}$ Mn $Cl_{2,4}$ en milieu acide ;

- la figure 5 représente les courbes de décharge de l'accumulateur

$C_{5,6}$ Mn $Cl_{2,4}$ // KOH (1ON) // Zn ;

- la figure 6 représente les courbes de décharge de l'accumulateur

(C + Mn $O_2$ γ) // KOH (1ON) // Zn.

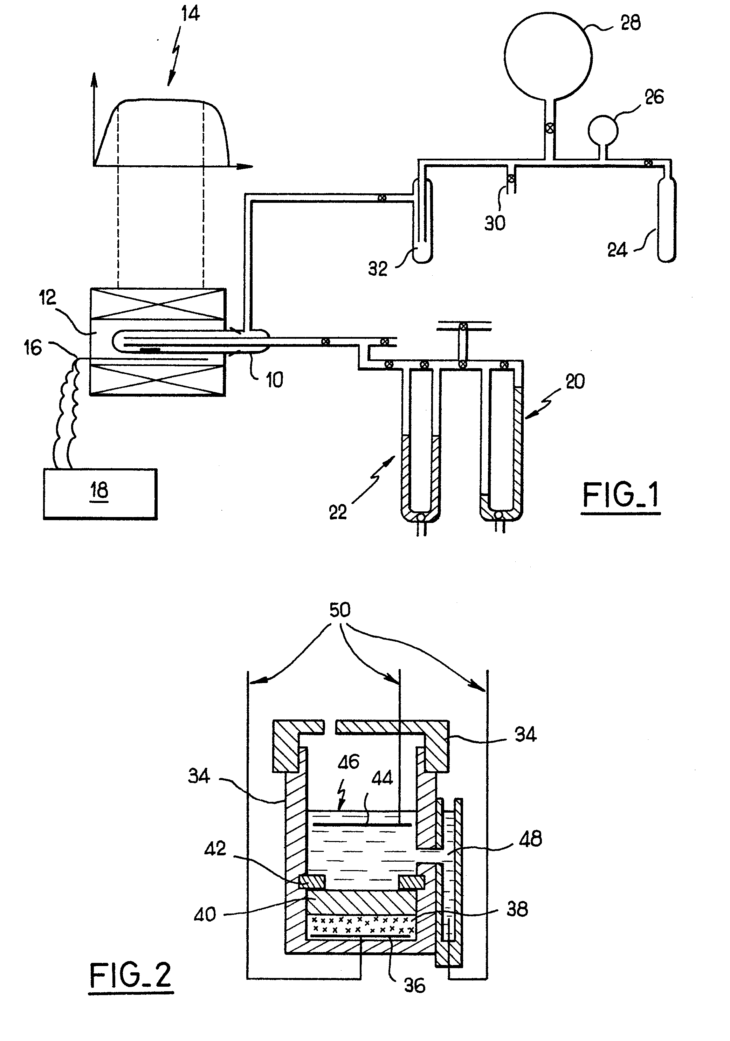

Le composé d'insertion du graphite avec le chlorure de manganèse selon l'invention peut être avantageusement obtenu par chauffage dans un tube de quartz couplé à une source de chlore avec interposition d'un dispositif manométrique permettant en permanence de mesurer la pression de chlore durant la réaction. La figure 1 illustre schématiquement un exemple d'un tel appareillage permettant la mise en oeuvre du procédé selon l'invention. Ce dispositif comporte un tube réacteur en quartz 10 placé dans un four tubulaire 12 dont le gradient de température est contrôlé tel que schématisé en 14. La température du four est mesurée par un dispositif approprié, par exemple par un thermocouple Chromel-Alumel 16 et se trouve enregistrée sur un dispositif servo-traceur "Servotrace" 18 qui sert également de base de temps. Le réacteur tubulaire en quartz 10 est en outre couplé à un manomètre à mercure 20 protégé par un autre manomètre à acide sulfurique 22, permettant d'effectuer des mesures de pression au cours du déroulement de la réaction d'insertion. La source de chlore alimentant le réacteur tubulaire en quartz 10 peut par exemple être constituée par une bouteille de chlore 24 couplée au réacteur par un conduit d'alimentation incorporant respectivement un ballon de sécurité 26, une réserve de chlore 28, une prise de vide 30, et un flacon desséchant 32. Des essais systématiques effectués sur un tel type d'installation ont démontré qu'en utilisant du graphite de Madagascar se présentant sous la forme de paillettes ayant un diamètre moyen de particules inférieur à environ 1 mm, la réaction d'insertion était achevée en quelques heures, à une température de l'ordre de 500°C et sous une pression de chlore environ égale à 700 mm de mercure. On indiquera ci-après à titre d'illustration un exemple particulier de préparation du composé d'insertion de graphite et de chlorure de manganèse selon la présente invention.

On mélange tout d'abord 1 g de graphite de Madagascar en paillettes (Ø < 1 mm) à 3 g de chlorure de manganèse anhydre pulvérulent. Ce mélange est alors placé dans le réacteur tubulaire en quartz et chauffé tout d'abord sous vide progressivement jusqu'à une température environ égale à 500°C. Après stabilisation de la température du four, le chlore gazeux est introduit sous une pression environ égale à 700 mm de mercure. On observe que l'insertion du chlorure de manganèse commence aussitôt et se trouve complètement achevée en une durée de quelques heures. Après refroidissement à la température ambiante, on récupère le composé d'insertion ainsi obtenu qui est alors lavé à l'acide chlorhydrique dilué et à l'eau pour éliminer le chlorure de manganèse en excès, puis le produit final est séché à l'étuve. Dans de telles conditions opératoires, on obtient 3,1 g de composé d'insertion qui est analysé par des méthodes classiques et dont la composition répond à la formule suivante :

$$C_{5,6 \pm 0,1} \, Mn \, Cl_{2,4 \pm 0,1}.$$

Ce composé d'insertion a été soumis à un certain nombre de tests électrochimiques conduits à l'aide d'une cellule de polarisation illustrée à la figure 2. Le corps 34 de cette cellule est par exemple avantageusement réalisé en plexiglass, matériau qui résiste bien aux solutions concentrées de potasse. La partie basse de cette cellule comprend un support de l'électrode du composé d'insertion qui se présente sous la forme d'une feuille de platine 36 sur laquelle repose le composé d'insertion 38 qui se trouve coiffé par une pastille de verre frittée 40 maintenue en place à l'aide d'anneaux de serrage 42. La cellule comporte également une contre-électrode 44, par exemple réalisée en platine, et l'électrolyte 46 baignant ces deux électrodes 40,44 est par exemple constitué par une solution aqueuse de potasse 10 N. Une électrode de référence Hg/HgO 48 permet d'effectuer les mesures de potentiel. On notera enfin que le circuit de polarisation comprend une alimentation stabilisée en courant ainsi qu'un milliampèremètre et que l'ensemble des fils de connexion 50 des électrodes est réalisé en platine. Cette cellule de polarisation a été couplée à un enregistreur qui permet de suivre l'évolution du potentiel en fonction du temps.

Dans la pratique il a été observé que la formation de la matière active est relativement lente, puisque plusieurs cycles sont nécessaires. Etant donné qu'une légère élévation de température accélère cette formation, l'ensemble des essais ont été conduits généralement en maintenant la cellule de polarisation à une température de l'ordre de 50°C. On notera enfin que, lorsque la matière active est formée, on peut sans inconvénient effectuer les différents cycles de charge-décharge à température ambiante. Tous les cycles ont été effectués à courant constant. Les différents essais effectués à l'aide de cette cellule de polarisation ont permis de conduire notamment à l'observation des phénomènes suivants :

a) Comportement de l'électrode $C_{5,6}$ Mn $Cl_{2,4}$ en milieu basique :

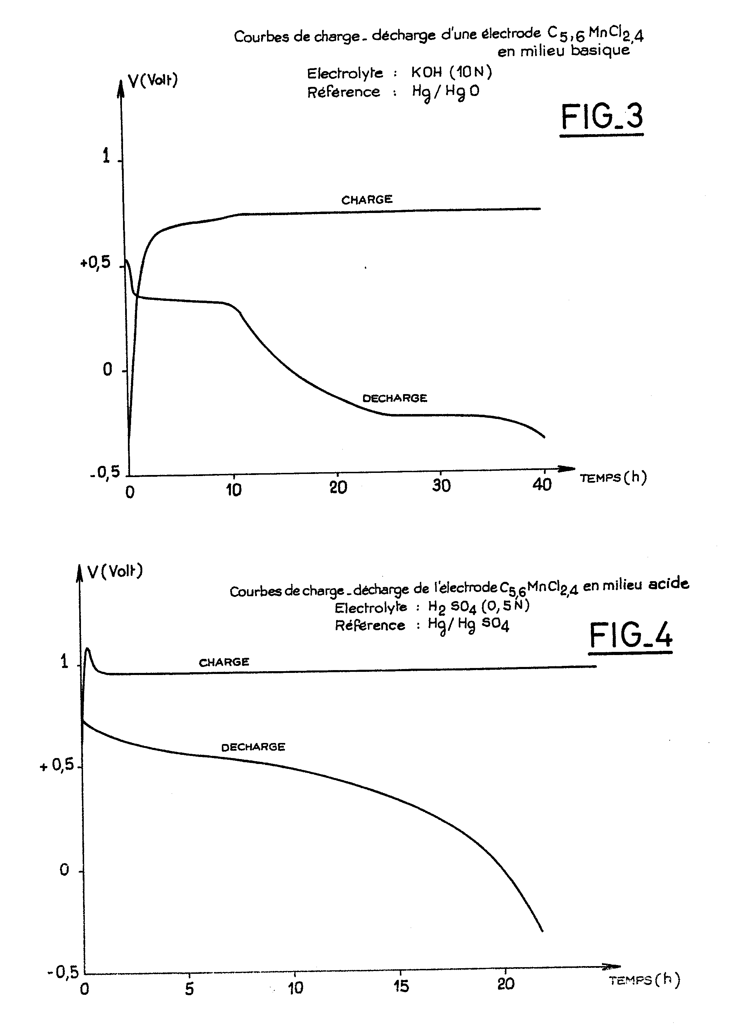

La figure 3 annexée représente les courbes de charge-décharge typiques obtenues dans le cas où l'électrolyte est de la potasse 10 N. Le potentiel mesuré par rapport à l'électrode de référence Hg/HgO conduit à un diagramme dont la comparaison avec les diagrammes de potentiel d'oxydo-réduction de l'atlas de POURBAIX montre que du $Mn^{7+}$ a été formé durant l'oxydation (charge). Cette première constatation démontre que l'électrode $C_{5,6}$ Mn $Cl_{2,4}$ peut donc être utilisée comme matériau cathodique en milieu basique.

b) Comportement de l'électrode $C_{5,6}$ Mn $Cl_{2,4}$ en milieu acide :

La figure 4 annexée représente les courbes de charge-décharge obtenues dans le cas où l'électrolyte est de l'acide sulfurique 0,5 N. L'électrode de référence est constituée par le couple $Hg/HgSO_4$. Un seul palier de décharge a pu être obtenu correspondant à la réaction $Mn^{4+} \longrightarrow Mn^{2+}$. Ceci démontre donc que le composé d'insertion selon l'invention peut être utilisé comme cathode en milieu acide.

c) Accumulateur $C_{5,6}$ Mn $Cl_{2,4}$ // KOH // Zn

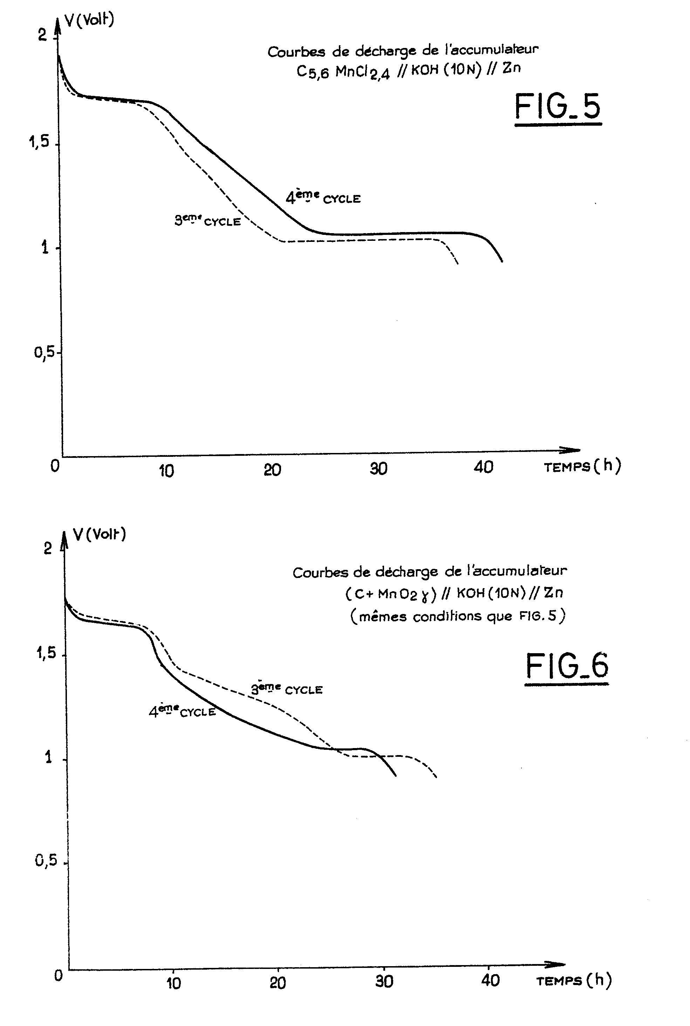

La figure 5 annexée représente les courbes de décharge d'un accumulateur $C_{5,6}$ Mn $Cl_{2,4}$ // KOH (10N) // Zn au troisième et au quatrième cycles.

La réalisation d'un tel accumulateur a par exemple été faite en utilisant la cellule de polarisation précédemment définie dans laquelle, toutefois, la contre-électrode de platine a été remplacée par une autre électrode métallique, telle que le Zn, le cadmium ou le fer. La tension aux bornes est mesurée en cours de décharge entre l'électrode de zinc métallique et l'électrode de composé d'insertion. La f.e.m. en circuit ouvert avant décharge est d'environ 2 Volts. Les décharges ont été conduites jusqu'à 0,9 Volt qui est la limite inférieure de la tension utilisable pratiquement. A l'examen du diagramme de la figure 5, on constate qu'au quatrième cycle la matière active n'est pas complètement formée puisqu'on enregistre encore un gain de capacité par rapport au troisième cycle.

d) Comparaison avec le système classique $MnO_2$/Zn :

Le composé d'insertion graphite-chlorure de manganèse a été remplacé dans la cellule de polarisation définie précédemment par un mélange de paillettes de graphite naturel et de poudre de bioxyde de manganèse électrolytique, en proportions telles que la quantité de manganèse soit rigoureusement la même que dans le composé d'insertion selon l'invention.

La figure 6 annexée montre les courbes de décharge obtenues au troisième et au quatrième cycles dans les mêmes conditions que précédemment. On observe que, dès le quatrième cycle il se produit une perte de capacité et qu'au sixième cycle la capacité est presque nulle. Cette expérience démontre donc clairement la nette amélioration de rechargeabilité apportée lorsque l'on utilise une cathode constituée par le composé d'insertion selon la présente invention.

Bien entendu, la présente invention ne saurait être limitée au mode de réalisation particulier décrit précédemment, mais il est parfaitement possible, sans pour autant sortir du cadre de la présente invention, d'en imaginer un certain nombre de variantes d'exécution.

## REVENDICATIONS

1/ Matériau cathodique pour accumulateur électrochimique, caractérisé en ce qu'il est constitué par un composé d'insertion du graphite avec le chlorure de manganèse de formule :

$$C_x \, Mn \, Cl_y$$

dans laquelle :

$x = 5,6 \pm 0,1$, et

$y = 2,4 \pm 0,1$.

2/ Procédé de préparation du composé d'insertion du graphite avec le chlorure de manganèse selon la revendication 1, caractérisé en ce que l'on chauffe, à une température d'environ 500°C, un mélange pulvérulent de graphite et de chlorure de manganèse anhydre sous atmosphère de chlore.

3/ Procédé selon la revendication 2, caractérisé en ce que l'on utilise du graphite de Madagascar sous la forme de paillettes ayant un diamètre moyen de particules inférieur à environ 1 mm.

4/ Procédé selon l'une des revendications 2 et 3, caractérisé en ce que le mélange pulvérulent de départ contient le chlorure de manganèse en excès par rapport au graphite.

5/ Procédé selon l'une des revendications 2 à 4, caractérisé en ce que le mélange pulvérulent de départ comprend environ 1 partie en poids de graphite et environ 3 parties en poids de chlorure de manganèse anhydre.

6/ Procédé selon l'une des revendications 2 à 5, caractérisé en ce que le mélange est tout d'abord chauffé sous vide jusqu'à environ 500°C puis, en maintenant cette température, on introduit dans le réacteur du chlore gazeux sous une pression d'environ 700 mm de mercure.

7/ Procédé selon l'une des revendications 2 à 6, caractérisé en ce que le composé d'insertion obtenu est lavé à l'acide chlorhydrique dilué et à l'eau pour éliminer le chlorure de manganèse en excès, puis est séché.

8/ Accumulateur électrochimique, caractérisé en ce qu'il comprend une cathode constituée par un composé d'insertion du graphite avec le chlorure de manganèse selon la revendication 1.

9/ Accumulateur selon la revendication 8, caractérisé en ce que l'anode est réalisée en un métal tel que le zinc, le cadmium et le fer, et en ce que l'électrolyte est un électrolyte alcalin tel que la potasse.

FIG_1

FIG_2

Courbes de charge - décharge d'une électrode $C_{5,6} MnCl_{2,4}$ en milieu basique

Electrolyte : KOH (10 N)
Référence : Hg / Hg O

## FIG_3

Courbes de charge - décharge de l'électrode $C_{5,6} MnCl_{2,4}$ en milieu acide
Electrolyte : $H_2 SO_4$ (0,5 N)
Référence : Hg / Hg $SO_4$

## FIG_4

Courbes de décharge de l'accumulateur
$C_{5,6} MnCl_{2,4}$ // KOH (10N) // Zn

## FIG.5

4ème CYCLE

3ème CYCLE

Courbes de décharge de l'accumulateur
$(C + MnO_2 \gamma)$ // KOH (10N) // Zn
(mêmes conditions que FIG.5)

## FIG.6

3ème CYCLE

4ème CYCLE

0094291

**Office européen des brevets**

**RAPPORT DE RECHERCHE EUROPEENNE**

Numéro de la demande

EP 83 40 0861

## DOCUMENTS CONSIDERES COMME PERTINENTS

| atégorie | Citation du document avec indication, en cas de besoin, des parties pertinentes | Revendication concernée | CLASSEMENT DE LA DEMANDE (Int. Cl. 3) |
|---|---|---|---|
| A | CARBON, vol. 4, no. 4, 1966, page 538, Oxford, GB<br>E. STUMPP et al.: "Graphite intercalation compounds with chlorides of manganese, nickel and zinc" * Page 538, colonne de gauche, paragraphes 1-2; tableau 1 *<br><br>--- | 2,7 | H 01 M 4/58<br>C 01 B 31/00 |
| A | US-A-4 041 220 (M.R. ARMAND)<br><br>* Revendication 1; exemple 4 *<br><br>--- | | |
| A | FR-A-2 100 192 (KALI CHEMIE AG)<br><br>--- | | |
| A | CHEMICAL ABSTRACTS, vol. 94, no. 13, juin 1981, page 527, no. 216434h, Columbus, Ohio, US<br>S. FLANDROIS et al.: "Intercalation compounds of graphite with nickel chloride as cathode material for alkaline batteries" & SYNTH. MET. 1981, 3(3-4), 195-200 * En entier *<br><br>--- | | **DOMAINES TECHNIQUES RECHERCHES (Int. Cl. 3)**<br><br>H 01 M 4/58<br>C 01 B 31/00 |
| A | FR-A-2 364 547 (AGENCE NATIONALE DE VALORISATION DE LA RECHERCHE (ANVAR))<br><br>--- -/- | | |

Le présent rapport de recherche a été établi pour toutes les revendications

| Lieu de la recherche<br>LA HAYE | Date d'achèvement de la recherche<br>28-07-1983 | Examinateur<br>D'HONDT J.W. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

| DOCUMENTS CONSIDERES COMME PERTINENTS | | Page 2 | |
|---|---|---|---|
| Catégorie | Citation du document avec indication, en cas de besoin, des parties pertinentes | Revendication concernée | CLASSEMENT DE LA DEMANDE (Int. Cl. ³) |
| P,A | SOLID STATE COMMUNICATIONS, vol. 42, no. 11, juin 1982, pages 759-762<br>F. BARON et al.: "Charge transfer and islands in metal halides-graphite intercalation compounds : new evidence from X-ray diffraction of intercalated Mn Cl2" * Page 759, colonne de droite; page 761, colonne de gauche, paragraphe 4 (Discussion) * | 2,3,7 | |
| | ----- | | |
| | | | DOMAINES TECHNIQUES RECHERCHES (Int. Cl. ³) |

Le présent rapport de recherche a été établi pour toutes les revendications

| Lieu de la recherche<br>LA HAYE | Date d'achèvement de la recherche<br>28-07-1983 | Examinateur<br>D'HONDT J.W. |
|---|---|---|